## Europäisches Patentamt

## European Patent Office

## Office européen des brevets

(19)

(11) Publication number: **0 018 089**
**B1**

(12) # EUROPEAN PATENT SPECIFICATION

(45) Date of publication of patent specification: **27.10.82**

(21) Application number: **80300866.3**

(22) Date of filing: **20.03.80**

(51) Int. Cl.³: **C 01 B 33/28**

(54) Method for preparing zeolite ZSM12 and zeolite prepared by this method.

<table>
<tr><td>

(30) Priority: **21.03.79 US 22260**

(43) Date of publication of application:<br>**29.10.80 Bulletin 80/22**

(45) Publication of the grant of the patent:<br>**27.10.82 Bulletin 82/43**

(84) Designated Contracting States:<br>**BE DE FR GB IT NL**

(56) References cited:<br>**EP - A - 0 001 695**<br>**DE - A - 2 548 695**<br>**US - A - 3 306 922**<br>**US - A - 3 832 449**<br>**US - A - 3 970 544**

</td><td>

(73) Proprietor: **MOBIL OIL CORPORATION**<br>**150 East 42nd Street**<br>**New York New York 10017 (US)**

(72) Inventor: **Chu, Pochen**<br>**1173 Ollerton Road**<br>**West Deptford, New Jersey (US)**<br>Inventor: **Kuehl, Guenter Hinrich**<br>**1956 Cardinal Lake Drive**<br>**Cherry Hill, New Jersey (US)**

(74) Representative: **Cooper, John Anthony**<br>**Mobil Court 3 Clements Inn**<br>**London WC2A 2EB (GB)**

</td></tr>
</table>

Courier Press, Leamington Spa, England.

**0018089**

Method for preparing zeolite ZSM12 and zeolite prepared by this method

This invention relates to a method of preparing a crystalline zeolite of the ZSM-12 family.

ZSM-12 is a well-known zeolite. Aluminum silicate forms of it are described in U.S. Patent Specification US—A—3,970,544, such forms conforming to this composition, in terms of mole ratios of oxides:

$$(1.0\pm0.4)M_{2/n}O \cdot \quad Al_2O_3 \cdot (20\text{—}200)\,SiO_2$$

$$(0\text{—}60)H_2O$$

wherein M is at least one cation having a valence n. The zeolite is defined by its lattice geometry, which gives rise to a definite X-ray diffraction pattern which distinguishes it from other zeolites. This X-ray diffraction pattern has the following significant lines:

TABLE 1

| Interplanar Spacing D (Å) | Relative Intensity I/Io |
|---|---|
| 11.9 ± 0.2 | m |
| 10.1 ± 0.2 | m |
| 4.76 ± 0.1 | w |
| 4.29 ± 0.08 | vs |
| 3.98 ± 0.08 | m |
| 3.87 ± 0.07 | vs |
| 3.49 ± 0.07 | w |
| 3.38 ± 0.07 | m |
| 3.20 ± 0.06 | w |
| 3.05 ± 0.05 | w |
| 2.54 ± 0.03 | w |

These values were determined by standard techniques. The radiation was the K-alpha doublet of copper and a diffractometer equipped with a scintillation counter and a strip chart recorder was used. The peak heights, I, and their positions were read from the diffractometer chart. From these, the relative intensities, $I/I_o$, where $I_o$ is the intensity of the strongest line or peak, and d(Å), the interplanar spacing in Å, corresponding to the recorded lines, were calculated. In Table 1 the relative intensities are given in terms of the symbols VS=Very strong, M=medium, W=weak. Different cationic forms of ZSM-12 reveal substantially the same pattern with some minor shifts in interplanar spacing and variation in relative intensity. Other minor variations can occur depending on the silicon to aluminum ratio of a particular sample and its thermal history.

U.S. Patent Specification US—A—3,970,544 describes the synthesis of ZSM-12 from a reaction mixture containing tetraethylammonium (TEA) ions. We have now discovered that ZSM-12 material can be synthesized from a reaction mixture containing the cheap and available methyltriethylammonium (MTEA) cation. Because of the steric compatibility between the MTEA ion and the ZSM-12 structure, the following advantages flow from employing MTEA cations instead of TEA (1) a broader range of $SiO_2/Al_2O_3$ product mole ratio can be achieved (2) a reduction in crystallization time (3) larger crystals and (4) elimination of any necessity for an aging step in the preparation of the zeolite. Quaternary compounds prepared from methyl halides are less expensive due to the high reactivity of the methyl halide.

According to the present invention, zeolite ZSM-12 is prepared from a reaction mixture containing a source of silica, optionally a source of alumina, methyltriethylammonium ion (MTEA), an alkali metal oxide, e.g. sodium, and water, and having the composition in terms of mole ratios of oxides:

2

**0018089**

| REACTANTS | BROAD | PREFERRED |
|---|---|---|
| $SiO_2/Al_2O_3$ | > 40 | > 80 |
| $M_2O/(MTEA)_2O$ | 0.2—2.0 | 0.3—1.8 |
| $H_2O/OH—$ | 50—400 | 70—350 |
| $OH—/SiO_2$ | 0.05—0.35 | 0.10—0.30 |

wherein M is alkali metal, and maintaining the mixture at 80°C to 180°C for from 6 hours to 150 days. When no source of alumina is employed the value of the ratio $SiO_2/Al_2O_3$ will of course be infinite.

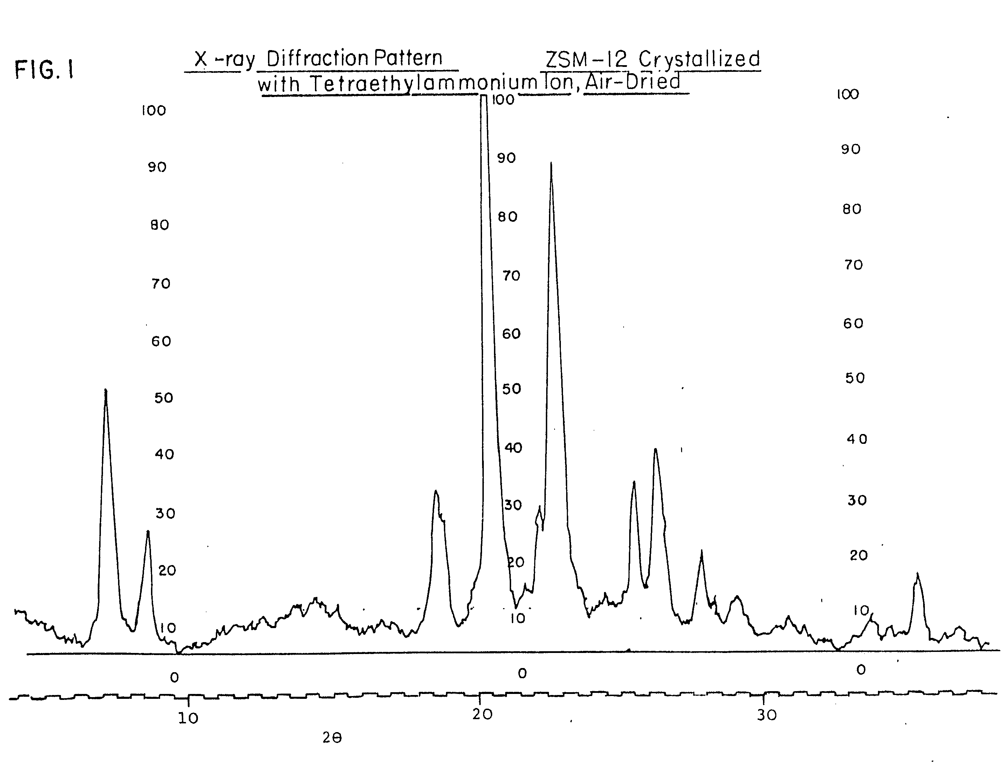

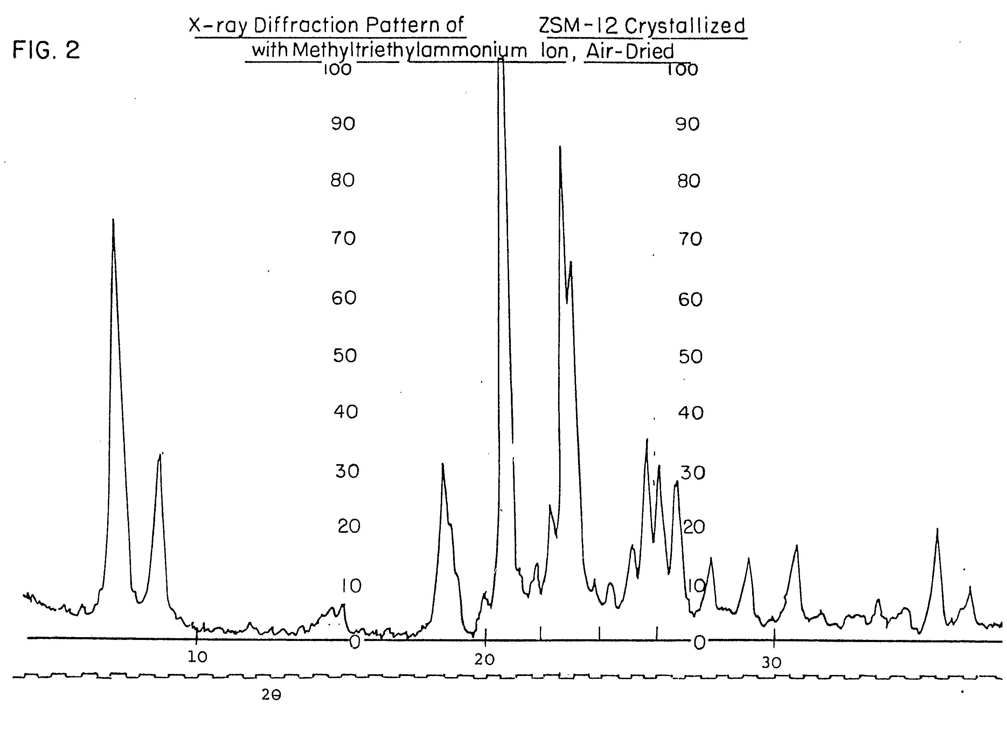

A crystalline material is routinely identified by comparing its X-ray diffraction pattern with those of reference materials. As a matter of convenience the air dried sample is used to determine the X-ray diffraction pattern. If a dehydrated sample of a zeolite is examined by this method, changes in relative intensities of the lines and small differences in line positions are usually observed and can be correlated with the nature and position of the cations present. The X-ray diffraction pattern of zeolite ZSM-12 crystallized in the presence of tetraethylammonium (TEA) ions is shown in Figure 1. Crystallization of ZSM-12 in the presence of methyltriethylammonium (MTEA) chloride gave the X-ray diffraction pattern shown in Figure 2. The principal changes to be observed are:

(1) The somewhat broad line at 26.55°, a poorly resolved doublet, is split into two well-resolved peaks at 26.2 and 26.75°.

(2) The line at 23.2° is split into a doublet at 23.0 and 23.3°.

(3) The line at 29.25° is narrowed.

(4) The intensity of the line at about 31° is increased considerably.

In addition several lines are shifted slightly, e.g., 28.05° to 27.9° and 35.55° to 35.7°.

Upon calcination (for 1 hour at 600°C) of the two samples the X-ray diffraction patterns became essentially identical. The minor differences observed can be attributed to the larger crystallite size of the MTEA-prepared sample.

The results suggest that the methyltriethylammonium ion fits into the structure of ZSM-12 more easily and imparts less strain on the framework than the tetraethylammonium ion. This conclusion is supported by the growth of the crystals to larger size than with TEA ions. It has also been found that ZSM-12 crystallizes from reaction mixtures containing MTEA ions without prior aging, whereas similar mixtures with TEA ions yielded ZSM-12 only when crystallized after prior aging, and zeolite ZSM-5 without aging.

Table 2 sets forth numerically the X-ray or traces of the drawings.

TABLE 2

| ZSM-12 (TEA) | | ZSM-12 (MTEA) | |
|---|---|---|---|
| d(Å) | I/Io | d(Å) | I/Io |
| 11.79 | S | 11.95 | S |
| 10.05 | M | 01.05 | M |
| | | 6.02 | VW |
| | | 5.86 | VW |
| 4.72 | M | 4.74 | M |
| 4.67 | M | 4.64 | W |
| 4.42 | W | 4.42 | W |
| 4.25 | VS | 4.24 | VS |
| 4.06 | VW | 4.06 | VW |
| 3.97 | M | 3.97 | M |

3

**0018089**

TABLE 2

| | ZSM-12 (TEA) | | ZSM-12 (MTEA) | |
|---|---|---|---|---|
| | d(Å) | I/Io | d(Å) | I/Io |
| | 3.83 | S | 3.86 | S |
| | | | 3.81 | S |
| | | | 3.72 | VW |
| | 3.62 | VW | 3.64 | VW |
| | | | 3.53 | W |
| | 3.45 | M | 3.46 | M |
| | | | 3.40 | M |
| | 3.35 | M | 3.325 | M |
| | 3.18 | W | 3.20 | W |
| | 3.13 | VW | | |
| | 3.05 | VW | 3.06 | W |
| | 2.88 | VW | 2.90 | W |
| | 2.83 | VW | 2.82 | VW |
| | 2.64 | VW | 2.66 | VW |
| | 2.59 | VW | 2.59 | VW |
| | 2.52 | W | 2.51 | M |
| | 2.43 | VW | 2.43 | W |
| | 2.34 | VW | 2.34 | W |
| | 2.33 | W | | |
| | 2.04 | W | 2.04 | W |

Crystallization can be carried out under either static or stirred condition. In the Examples static conditions were employed using polypropylene jars at 100°C or teflon(Trade Mark)-lined stainless steel autoclaves at 160°C. The total useful range of temperatures is 80°C to 180°C for about 6 hours to 150 days. Thereafter, the zeolite crystals are separated from the liquid and recovered. Reaction mixtures can include sodium silicate, silica hydrosol, silica gel, silicic acid, and sodium hydroxide, and methyltriethylammonium compounds (e.g. MTEACl). The reaction mixture can be prepared either batch-wise or continuously. Crystal size and crystallization time vary with the nature of the reaction mixture employed and the crystallization conditions.

The zeolite can be in the form of a powder, a granule, or a molded product, such as an extrudate having particle size sufficient to pass through a 2 mesh (Tyler) screen and be retained on a 400 mesh (Tyler) screen. In cases where a catalyst is molded, such as by extrusion, it can be extruded before drying or dried or partially dried and then extruded.

Zeolite ZSM-12 can be used as a catalyst in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such component can be exchanged into the composition, impregnated therein or physically intimately admixed therewith. Such component can be impregnated in or on it such as, for example, by, in the case of platinum, treating the zeolite with a solution containing a platinum metal-

4

containing ion. Thus, suitable platinum compounds include chloroplatinic acid, platinous chloride and various compounds containing the tetrammineplatinum complex.

The metal, hydrogen, ammonium and methyltriethylammonium forms of ZSM-12 can be beneficially converted to a catalytically applicable form by thermal treatment, generally by heating in an atmosphere such as air, nitrogen, steam etc., at a temperature of at least 371.2°C (700°F) for at least 1 minute and generally not more than 20 hours to remove part or all of the water and the organic constituent. While subatmospheric pressure can be employed for the thermal treatment, atmospheric pressure is desired for reasons of convenience. The thermal treatment can be performed at a temperature up to about 926.7°C (1700°F). The thermally treated product is particularly useful in the catalysis of certain hydrocarbon conversion reactions.

Simple dehydration can also be performed at ambient temperatures such as merely by placing the zeolite in a vacuum, but a longer time is required to obtain a sufficient amount of dehydration.

It is often desirable to composite the zeolite with another material resistant to the temperatures and other conditions employed in organic conversion processes. Suitable binders and matrices are described in our European Patent Application EP—A—0001695.

Employing a catalytically active form of the ZSM-12 type catalyst of this invention which may contain additional hydrogenation components, reforming stocks can be reformed employing a temperature between 371.2°C (700°F) and 537.8°C (1000°F). The pressure can be between 790—9kPa (100 psig) and 6996.1kPa (1000 psig) but is preferably between 1480.3kPa (200 psig) and 4927 7kPa (700 psig). The liquid hourly space velocity is generally between 0.1 and 10, preferably between 0.5 and 4 and the hydrogen to hydrocarbon mole ratio is generally between 1 and 20 preferably between 4 and 12.

The catalyst can also be used for hydroisomerization of normal paraffins, when provided with a hydrogenation component, e.g., platinum. Hydroisomerization is carried out at a temperature between 93.4°C (200°F) and 371.2°C (700°F) preferably 148.9°C (300°F) to 287.8°C (550°F) with a liquid hourly space velocity between 0.01 and 2, preferably between 0.25 and 0.50 employing hydrogen such that the hydrogen to hydrocarbon mole ratio is between 1:1 and 5:1. Additionally, the catalyst can be used for olefin or aromatic isomerization employing temperatures between −1.2°C (30°F) and 371.2°C (700°F).

The catalyst can also be used for reducing the pourpoint of gas oils. This reduction is carried out at a liquid hourly space velocity between about 10 and about 30 and a temperature between about 426.7°C (800°F) and about 593.4°C (1100°F).

Other reactions which can be accomplished employing the catalyst of this invention containing a metal, e.g., platinum, include hydrogenation-dehydrogenation reactions and desulfurization reactions, olefin polymerization (oligomerization) and other organic compound conversion such as the conversion of alcohols (e.g. methanol) to hydrocarbon.

In the Examples which follow adsorption data were determined as follows:

A weighed sample of the calcined adsorbent was contacted with the desired pure adsorbate vapor in an adsorption chamber, evacuated to <133.322 Pa (1 mm) and contacted with 1599.864 Pa (12 mm Hg) water vapor or 2666.44 Pa (20 mm Hg) of cyclohexane or n-hexane vapor, pressures less than the vapor-liquid equilibrium pressure of the respective adsorbate at room temperature. The pressure was kept constant (within about ±66.661 Pa (0.5 mm) by addition of adsorbate vapor controlled by a manostat during the adsorption period which did not exceed about eight hours. As adsorbate was adsorbed, the decrease in pressure caused the manostat to open a valve which admitted more adsorbate vapor to the chamber to restore the above control pressures. Sorption was complete when the pressure change was not sufficient to activate the manostat. The increase in weight was calculated as the adsorption capacity of the sample in g/100 g of calcined adsorbent. All percentages are by weight unless otherwise specified.

### Examples 1—7

Aluminum nitrate and sodium hydroxide were dissolved in the amount of water specified in Table 3. Methyltriethylammonium chloride aqueous solution (50%) was added. Finally, Hi-Sil, a precipitated and dried silica containing about 90% $SiO_2$, remainder water, was added, and the mixture was agitated until a smooth consistency was obtained. The preparation and, in some examples, aging of the bench scale reaction mixtures was carried out in polypropylene vessels. The mixtures were transferred into "Teflon"(trademark)-lined pressure vessels which were then sealed and heated by immersion in a silicone oil batch. These mixtures were not agitated during crystallization.

In the scale-up preparations of Examples 2 and 3 a 18.9 $dm^3$(5-gal) autoclave equipped with a stirrer and heated with steam was used. The reaction mixture was prepared and, in Example 3, aged in the autoclave prior to crystallization. The stirrer was operated at 90 rpm to ensure a good heat transfer in the heat-up and crystallization periods.

The crystalline products were filtered, washed with water and dried at ambient temperature (bench-scale preparations) or at 120°C in a drying oven (scale-up runs).

The results are summarized in Table 3, in which the amounts of $H_2O$ furnished in the formulations represent pure water added to the reaction mixture as such.

TABLE 3

Preparation of ZSM-12 Type Zeolite With MTEA Cl Solution

| Formulation | Example | | | | | | |
|---|---|---|---|---|---|---|---|
| | 1 | 2 | 3 | 4 | 5 | 6 | 7 |
| Hi-Sil, g. | 48 | 2400 | 2400 | 48 | 60 | 48 | 48 |
| $Al(NO_3)_3 \cdot 9H_2O$, g. | 1 | 80 | 80 | 1 | 2 | — | — |
| NaOH | 4.8 | 250 | 250 | 4.8 | 6.25 | 4.5 | 4.5 |
| MTEA Cl (50%), g. | 50 | 1410 | 1410 | 50 | 32.25 | 50 | 25 |
| $H_2O$ | 230 | 10,800 | 10,800 | 225 | 270 | 225 | 225 |
| Aging of Reaction Mixture | None | None | R.T. for 96 Hrs. | 24 Hrs. at 50°C | 24 Hrs. at 50°C | None | None |
| Crystallization Temp. °C(°F) | 160(320) | 160(320) | 160(320) | 160(320) | 160(320) | 160(320) | 160(320) |
| Time, Hour | 120 | 90 | 69 | 190 | 118 | 163 | 163 |
| Agitation, rpm | None | 90 | 90 | None | None | None | None |
| Property of Product | | | | | | | |
| Crystallinity* | 100 | Crystalline ZSM-12 Type + Trace ZSM-5 | 105 | 100 | 100 | 90 | 90 |
| $SiO_2/Al_2O_3$ | 194 | 124.9 | 118 | 174 | 97 | 217 | 214 |
| $H_2O$ Adsorption | | | | | | | |
| g/100 g of zeolite | 7.9 | 11.9 | 6.5 | 8.0 | 7.2 | 8.5 | 8.1 |
| CyC$_6$ Adsorption | | | | | | | |
| g/100 g of zeolite | 7.6 | 5.6 | 5.2 | 7.7 | 7.2 | 7.4 | 7.4 |
| nC$_6$ Adsorption | 6.5 | 6.9 | 6.9 | 6.4 | 6.1 | 6.7 | 6.5 |
| g/100 g of zeolite | | | | | | | |

* Based on the product of Example 4

Chemical analysis of the products of Examples 1—7 follows below in Table 4.

TABLE 4

Chemical Analysis

| Product of Example: | $SiO_2$ | $Al_2O_3$ | $Na_2O$ | C | N | Ash | $SiO_2/Al_2O_3$ |
|---|---|---|---|---|---|---|---|
| 1 | 85.8 | 0.75 | 0.61 | 5.76 | 0.95 | 98.9 | 194 |
| 2 | 86.0 | 1.17 | 1.29 | 6.07 | 1.04 | 88.8 | 125 |
| 3 | 83.4 | 1.20 | 1.62 | 5.81 | 1.03 | 88.8 | 118 |
| 4 | 85.9 | 0.84 | 0.62 | 5.72 | 0.93 | 90.2 | 174 |
| 5 | 85.7 | 1.5 | 0.62 | 5.63 | 1.02 | 89.9 | 97 |
| 6 | 85.6 | 0.67 | 0.55 | NA | 0.99 | 89.9 | 217 |
| 7 | 85.5 | 0.68 | 0.54 | 5.63 | 1.02 | 89.9 | 214 |

Claims

1. A method for preparing zeolite ZSM-12 which comprises preparing a reaction mixture containing sources of an alkali metal oxide, an oxide of silicon, optionally an oxide of aluminium, tetraalkylammonium ion and water and maintaining said mixture until crystals of said zeolite are formed, characterised by the fact that the tetraalkylammonium ion is methyltriethylammonium, and that the mixture has, in terms of mole ratios of oxides, the composition:

$$SiO_2/Al_2O_3 = >40$$

$$M_2O/(MTEA)_2O = 0.2 \text{ to } 2.0$$

$$H_2O/OH = 50 \text{ to } 400$$

$$OH/SiO_2 = 0.05 \text{ to } 0.35$$

and is maintained at 80°C to 180°C for from 6 hours to 150 days.

2. A method according to claim 1 wherein said mixture has a composition in terms of mole ratios of oxides, falling within the following ranges:

$$SiO_2/Al_2O_3 = >80$$

$$M_2O/(MTEA)_2O = 0.3 \text{ to } 1.8$$

$$H_2O/OH = 70 \text{ to } 350$$

$$OH/SiO_2 = 0.10 \text{ to } 0.30$$

3. A method according to claim 1 or claim 2 wherein substantially no alumina is present.
4. A method according to any of claims 1 to 3 wherein M is sodium.

Patentansprüche

1. Verfahren zur Herstellung von Zeolith ZSM-12, wobei ein Reaktionsgemisch, enthaltend Ausgangsquellen eines Alkalimetalloxids, eines Oxids von Silicium, gegebenenfalls eines Oxids von Aluminium, Tetraalkylammoniumionen und Wasser, hergestellt und das Gemisch gehalten wird, bis Kristalle des betreffenden Zeolithen gebildet werden, dadurch gekennzeichnet, daß das Tetraalkylammonium Methyltriäthylammonium ist und daß das Gemisch die Zusammensetzung (mit Bezug auf Molverhältnisse von Oxiden) wie folgt hat:

7

$$SiO_2/Al_2O_3 \quad = > 40$$

$$M_2O/(MTEA)_2O = 0,2 \text{ bis } 2,0$$

$$H_2O/OH \quad = 50 \text{ bis } 400$$

$$OH/SiO_2 \quad = 0,05 \text{ bis } 0,35$$

und bei 80 bis 180°C während einer Zeitdauer von 6 h bis 150 Tagen gehalten wird.

2. Verfahren nach Anspruch 1, dadurch gekennzeichnet, daß das Gemisch eine Zusammensetzung (mit Bezug auf Molverhältnisse von Oxiden) hat, die in die folgenden Bereiche fällt:

$$SiO_2/Al_2O_3 \quad = > 80$$

$$M_2O/(MTEA)_2O = 0,3 \text{ bis } 1,8$$

$$H_2O/OH \quad = 70 \text{ bis } 350$$

$$OH/SiO_2 \quad = 0,10 \text{ bis } 0,30$$

3. Verfahren nach Anspruch 1 oder 2, dadurch gekennzeichnet, daß im wesentlichen kein Aluminiumoxid vorhanden ist.

4. Verfahren nach einem der Ansprüche 1 bis 3, dadurch gekennzeichnet, daß M Natrium ist.

**Revendications**

1. Procédé pour la préparation de zéolite ZSM-12 qui comprend la préparation d'un mélange réactionnel contenant des sources d'un oxyde de métal alcalin, d'un oxyde de silicium, éventuellement d'un oxyde d'aluminium, d'ions tétraalkylammonium et d'eau et le maintien dudit mélange jusqu'à ce que des cristaux de ladite zéolite se forment, caractérisé par le fait que l'ion tétraalkylammonium est l'ion méthyltriéthylammonium et en ce que le mélange a la composition suivante exprimée en rapports molaires des oxydes:

$$SiO_2/Al_2O_3 \quad = > 40$$

$$M_2O/(MTEA)_2O = 0,2 \text{ à } 2,0$$

$$H_2O/OH \quad = 50 \text{ à } 400$$

$$OH/SiO_2 \quad = 0,05 \text{ à } 0,35$$

et est maintenu entre 80 et 180°C pendant 6 heures à 150 jours.

2. Procédé selon la revendication 1 dans lequel lédit mélange a une composition exprimée par les rapports molaires des oxydes, comprise dans les gammes suivantes:

$$SiO_2/Al_2O_3 \quad = > 80$$

$$M_2O/(MTEA)_2O = 0,3 \text{ à } 1,8$$

$$H_2O/OH \quad = 70 \text{ à } 350$$

$$OH/SiO_2 \quad = 0,10 \text{ à } 0,30$$

3. Procédé selon l'une des revendications 1 ou 2 dans lequel il n'y a essentiellement pas d'alumine présente.

4. Procédé selon l'une quelconque des revendications 1 à 3 dans lequel M est le sodium.

FIG. I  X-ray Diffraction Pattern    ZSM-12 Crystallized with Tetraethylammonium Ion, Air-Dried

2θ

FIG. 2

X-ray Diffraction Pattern of ZSM-12 Crystallized with Methyltriethylammonium Ion, Air-Dried

2θ